# EUROPÄISCHE PATENTSCHRIFT

(11) **EP 0 576 706 B1**
(45) Veröffentlichungstag und Bekanntmachung des Hinweises auf die Patenterteilung: **07.06.1995**
(21) Anmeldenummer: 92111079.7
(22) Anmeldetag: 30.06.1992
(51) Int. Cl.: H02H 7/12, H02M 3/335

(54) **Schaltungsanordnung zur Stromversorgung mit wenigstens zwei Ausgängen**
Power-supply circuit with at least two outputs
Circuit d'alimentation en courant avec un minimum de deux sorties

(43) Veröffentlichungstag der Anmeldung: 05.01.1994
(73) Patentinhaber: SIEMENS AKTIENGESELLSCHAFT, 80333 München (DE)
(72) Erfinder: Immler, Josef, Dipl.-Ing., W-8039 Puchheim (DE)

(56) Entgegenhaltungen:
- EP-A- 0 165 087
- EP-A- 0 411 147
- DE-A- 3 525 942
- DE-A- 3 638 035
- US-A- 4 209 826
- US-A- 5 029 269
- ELEKTRONIK Bd. 39, Nr. 9, 27. April 1990, MUNCHEN DE Seiten 153 - 156HAUSBERGER 'integrierte spannungs berwachung'

## Beschreibung

Die Erfindung bezieht sich auf eine wie im Oberbegriff des Patentanspruchs 1 angegebene Schaltungsanordnung zur Stromversorgung mit wenigstens zwei Ausgängen.

Eine derartige Schaltungsanordnung zur Stromversorgung ist bereits aus der DE 29 15 436 C2 bekannt. Die bekannte Schaltungsanordnung enthält je zu überwachender Ausgangsspannung eine Spannungsmeßschaltung. An die Spannungsmeßschaltungen ist eine zentrale Auswerteeinrichtung angeschlossen, die bei wenigstens einer fehlerhaften Gleichspannung anspricht und die Gleichspannungen abschaltet. Die Spannungsmeßschaltungen sind als Brückenschaltungen mit einer im Querzweig liegenden Sendediode eines Optokopplers ausgebildet. Die zentrale Auswerteeinrichtung enthält einen ersten Schwellwertschalter, der an eine Parallelschaltung der Optokoppler-Ausgänge angeschlossen ist. Der Schwellwertschalter wird bei wenigstens einem niederohmig gesteuerten Optokoppler-Ausgang in den Ansprechzustand überführt und ist mit einer in einem Rückkopplungskreis gelegenen Rückkopplungsschaltung versehen. Der Rückkopplungskreis enthält eine für das Rückkopplungssignal in Durchlaßrichtung gepolte Diode und in Serie dazu einen Integrator und einen weiteren Schwellwertschalter.

Bei der bekannten Schaltungsanordnung wird die Stromversorgung beim Verschwinden von kurzzeitigen Überspannungen wieder eingeschaltet, so daß die mit Strom zu versorgenden Verbraucher nicht unnötig außer Betrieb gesetzt werden.

Erst dann, wenn der Integrator eine Dauerstörung festgestellt hat, hält sich der Schwellwertschalter über seinen Rückkopplungskreis selbst und gibt ein Dauersignal ab. Allerdings ist hierzu zusätzlich zu den je Ausgang vorgesehener Spannungsvergleichern im zentralen Schaltungsteil eine Anordnung mit einem Integrierglied und zwei Komparatoren erforderlich.

Aufgabe der Erfindung ist es, eine wie im Oberbegriff des Patentanspruchs 1 angegebene Schaltungsanordnung derart auszubilden, daß sie für die Überwachung der Ausgangsgleichspannungen mit einem vergleichsweise geringen Aufwand auskommt.

Gemäß der Erfindung wird die Schaltungsanordnung zur Lösung dieser Aufgabe in der im kennzeichnenden Teil des Patentanspruchs 1 angegebenen Weise ausgebildet. Die Potentialtrennvorrichtung kann dabei in bekannter Weise aus mehreren Optokopplern bestehen, deren Emitter-Kollektorstrecken einander parallel geschaltet sind. Die den Ausgängen der Stromversorgungsvorrichtung zugeordneten Komparatoren sind nach Art einer verdrahteten Oder-Schaltung miteinander verbunden. Spricht einer der Komparatoren an, so wird der in Serie zur Eingangsspannungsquelle liegende und über die Potentialtrennvorrichtung steuerbare Schalter sofort gesperrt. Liegt ein Dauerfehler vor, so daß die Sperrung des Schalters nicht zu einem Absinken der Ausgangsspannungen führt, so spricht der im Schwellwertschalter enthaltene Komparator an und hält sich selbst.

Eine zweckmäßige Ausgestaltung der Ladeanordnung geht aus Anspruch 2 hervor.

Die Weiterbildung der Erfindung nach Anspruch 3 hat den Vorteil, daß als Potentialtrennvorrichtung nur ein einziger Optokoppler erforderlich ist.

Man kann den die Potentialtrennvorrichtung bildenden Optokoppler an eine Versorgungsspannung legen, die aus einer zusätzlichen Hilfsspannungsquelle stammt. Die Weiterbildung der Erfindung nach Anspruch 4 hat demgegenüber den Vorteil, daß zur Speisung der Fotodiode bei hoher Verfügbarkeit der Versorgungsspannung eine derartige Hilfsspannungsquelle nicht erforderlich ist.

Bei der redundanten Speisung der Potentialtrennvorrichtung von mehreren Gleichspannungsausgängen der Stromversorgungsvorrichtung her können nach Anspruch 5 bei geringem Aufwand Ausgänge mit unterschiedlich großen Ausgangsspannungen Verwendung finden.

Die Schaltungsanordnung eignet sich insbesondere zur Speisung von Einrichtungen der elektrischen Nachrichtenübertragungstechnik.

Weitere Ausgestaltungen der Erfindung ergeben sich aus den Ansprüchen 6 bis 9.

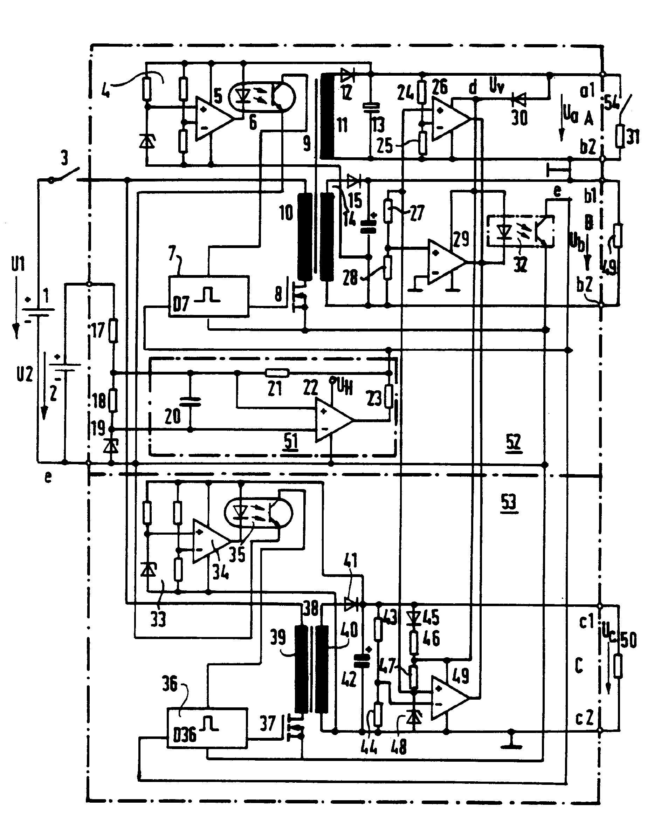

Die Erfindung wird anhand des in der Figur gezeigten Ausführungsbeispieles näher erläutert.

Die Figur zeigt eine Vorrichtung zur Stromversorgung mit mehreren Gleichspannungsausgängen.

Die in der Figur gezeigte Schaltungsanordnung enthält die beiden Schaltregler bzw. Gleichspannungsumrichter 52 und 53. Beide Umrichter 52 und 53 sind mit ihren Eingängen über den Schalter 3 an die Eingangsspannungsquelle 1 angeschlossen, die die Eingangsspannung U1 liefert.

Der Gleichspannungsumrichter 52 enthält eine Serienschaltung, die aus der Primärwicklung 10 des Transformators 9 und der Drain-Source-Strecke des Feldeffekttransistors 8 besteht und über den Schalter 3 mit der Gleichspannungsquelle 1 verbunden ist.

Parallel zur ersten Sekundärwicklung 11 des Transformators 9 liegt eine aus der Diode 12 und dem Ladekondensator 13 bestehende Serienschaltung. Parallel zum Ladekondensator 13 liegt der Ausgang A für die erste Ausgangsspannung Uₐ.

Parallel zur zweiten Sekundärwicklung 14 des Transisformators 9 liegt eine aus der Diode 15 und dem Ladekondensator 16 bestehende Serienschaltung. Parallel zum Ladekondensator 16 liegt der Ausgang B für die zweite Ausgangsspannung U_{b}.

Am Ausgang A liegt eine aus dem Schalter 54 und dem Lastwiderstand 31 bestehende Serienschaltung. An den Ausgang B ist der Lastwiderstand 31 angeschlossen.

Der Gleichspannungsumrichter 53 enthält eine Serienschaltung, die aus der Primärwicklung 39 des Transformators 38 und der Drain-Source-Strecke des Feldeffekttransistors 37 besteht und über den Schalter 3 mit der Gleichspannungsquelle verbunden ist. Parallel zur Sekundärwicklung 40 des Transformators 38 liegt eine aus der Diode 41 und dem Ladekondensator 42 bestehende Serienschaltung. Parallel zum Ladekondensator 42 liegt der Ausgang C für die dritte Ausgangsspannung U_{c}. Am Ausgang C liegt der Lastwiderstand 50.

Die Dioden 12 und 15 sind so gepolt, daß sie bei gesperrtem Feldeffekttransistor 8 leitend sind. Der Gleichspannungsumrichter 52 bildet daher einen Sperrumrichter. Der Gleichspannungsumrichter 52 ist mit einer Anordnung zur Regelung der Ausgangsspannungen Uₐ und U_{b} versehen. Da die Anschlüsse a2 und b1 der beiden Ausgänge A und B an Bezugspotential liegen, sind die Ausgangsspannungen Uₐ und U_{b} zueinander in Serie geschaltet. Zwischen dem Anschluß a1 des Ausgangs A und dem Anschluß b2 des Ausgangs B liegt die Summe der Spannungen Uₐ und U_{b}.

Im Spannungsvergleicher 4 wird aus der Zenerspannung einer Z-Diode und einem Teil der Summe der beiden Ausgangsspannungen Uₐ und U_{b} eine der Regelabweichung entsprechende Größe gebildet. Diese Größe wird im Operationsverstärker 5 verstärkt und über den Optokoppler 6 der Steuerschaltung 7 zugeführt. Die Steuerschaltung 7 steuert den Feldeffekttransistor 8 derart, daß die Summe der Spannungen Uₐ und U_{b} wenigstens näherungsweise auf einem konstanten Wert gehalten wird.

Die Diode 41 des Gleichspannungsumrichters 53 ist so gepolt, daß sie bei gesperrtem Feldeffekttransistor 37 leitend ist. Der Gleichspannungsumrichter 53 bildet daher ebenfalls einen Sperrumrichter. Der Gleichspannungsumrichter 53 ist mit einer Anordnung zur Regelung der Ausgangsspannung U_{c} versehen, die zwischen den Anschlüssen c1 und c2 liegt.

Im Spannungsvergleicher 33 wird aus der Zenerspannung einer Z-Diode und der Ausgangsspannung U_{c} eine der Regelabweichung entsprechende Größe gebildet. Diese Größe wird im Operationsverstärker 34 verstärkt und über den Optokoppler 35 der Steuerschaltung 36 zugeführt. Die Steuerschaltung 36 steuert den Feldeffekttransistor 37 derart, daß die Spannung U_{c} wenigstens näherungsweise auf einem konstanten Wert gehalten wird.

Je Ausgang A, B, C ist ein Komparator 26, 29 bzw. 49 vorgesehen. Diese Komparatoren liegen mit ihren Speiseeingängen zwischen dem Speiseanschluß d und Masse. Der Speiseanschluß d ist über die Diode 30 mit dem Anschluß a1 des Ausgangs A und über die aus der Diode 45 und dem Widerstand 46 bestehende Serienschaltung mit dem Anschluß c1 des Ausgangs C verbunden. Die Diode 30 ist für die Ausgangsspannung Uₐ, die Diode 45 für die Ausgangsspannung U_{c} in Durchlaßrichtung gepolt.

Am Ausgang A liegt der aus den Widerständen 24 und 25 bestehende Spannungsteiler, dessen Abgriff mit dem Minuseingang des Komparators 26 verbunden ist. Am Ausgang C liegt der aus den Widerständen 43 und 44 bestehende Spannungsteiler, dessen Abgriff an den Minuseingang des Komparators 49 geführt ist.

Zwischen dem Speiseanschluß d und Masse liegt ferner die aus dem Widerstand 47 und der Z-Diode 48 bestehende Serienschaltung.

Der gegen das Bezugspotential Spannung führende Anschluß der Z-Diode 48 ist unmittelbar mit den Pluseingängen der Komparatoren 26 und 49 verbunden und über den aus den Widerständen 27 und 28 bestehenden Spannungsteiler an den Anschluß b2 geführt, der gegenüber dem Bezugspotential die negative Spannung U_{b} führt. Der Abgriff des Spannungsteilers 27, 28 ist mit dem nicht invertierenden Eingang des Komparators 29 verbunden. Der invertierende Eingang des Komparators 29 liegt an Masse.

Die Ausgänge der Komparatoren 26, 29 und 49 sind unmittelbar miteinander verbunden. Zwischen der ausgangsseitigen Verbindung der Komparatoren 26, 29 und 49 und dem gemeinsamen Speisespannungsanschluß d der Komparatoren liegt die lichtemittierende Diode des Optokopplers 32. Die Komparatoren 26, 29, 49 enthalten jeweils am Ausgang eine Vorrichtung zur Strombegrenzung. Die Ausgangsströme sind auf einen Wert begrenzt, der unterhalb des für die Fotodiode des Optokopplers maximal zulässigen Stromes liegt. Der Phototransistor des Optokopplers 32 ist mit seinem Emitter an den Minuspol der Eingangsspannungsquelle 1 angeschlossen und mit seinem Kollektor an die Sperreingänge d7 und d36 der Steuerschaltungen 7 und 36 geführt.

Der Schwellwertschalter 51 enthält den Komparator 22 mit offenem Kollektorausgang. Der Ausgang des Komparators 22 ist über den Widerstand 23 mit dem Kollektor des im Optokoppler 32 enthaltenen Phototransistors verbunden, der den Ausgang e der Potentialtrennvorrichtung bildet. Der Ausgang e der Potentialtrennvorrichtung ist ferner über den Widerstand 21 an den nicht invertierenden Eingang des Komparators 22 geführt. Zwischen den beiden Eingängen des Komparators 22 liegt der Kondensator 20.

Der Kondensator 20 läßt sich mit Hilfe einer Ladeanordnung auf eine vorgegebene Spannung aufladen. Die Ladeanordnung enthält den parallel zum Kondensator 20 und somit zwischen den Eingängen des Komparators 22 liegenden Widerstand 18, den zwischen dem Pluspol der Hilfsspannungsquelle 2 und dem nicht invertierenden Eingang des Komparators 22 angeordneten Widerstand 17 und die zwischen dem invertierenden Eingang des Komparators 22 und dem Minuspol der Hilfsspannungsquelle 2 angeordnete, in bezug auf die Hilfsspannung U2 in Sperrichtung gepolte Z-Diode 19. Die miteinander verbundenen Minuspole der Eingangsspannungsquelle 1 und der Hilfsspannungsquelle 2 bilden ein gemeinsames Potential für alle Regel- und Steuerfunktionen.

Um den Bauteileaufwand des Schaltreglers möglichst klein zu halten, werden mehrere Ausgangsspannungen, und zwar die Ausgangsspannungen Uₐ und U_{b} mit nur dem einen Transformator 9 erzeugt. Dabei ist nicht vorgesehen, jede dieser beiden Spannungen Uₐ und U_{b} einzeln zu regeln. Vielmehr wird nur die Summe der beiden Ausgangsspannungen Uₐ und U_{b} geregelt. Gegebenenfalls kann in Abwandlung der Anordnung eine Differenz mehrerer Ausgangsspannungen geregelt werden.

Beim Erreichen eines Überspannungsgrenzwertes wird vorerst nur die Ansteuerung der Feldeffekttransistoren 8 und 37 unverzüglich ausgesetzt. Hierdurch wird verhindert, daß die Überspannungsabschaltung bei unspezifischen Lastzuständen anspricht. Bei einer ernsthaften Störung bleibt eine Ausgangsspannung dennoch über dem vorgegebenen Ansprechwert und löst nach einer einstellbaren Verzögerung das Abschalten der Stromversorgung aus. Der Fehlerzustand wird dabei mit Hilfe des RC-Gliedes 21, 20 und des Komparators 22 erfaßt und gespeichert.

Erreicht die Ausgangsspannung Uₐ einen vorgegebenen Grenzwert, so wird der Ausgang des Komparators 26 leitend und der Ausgangstransistor des Optokopplers 32 aktiviert den Disable-Eingang D7 und den Disable-Eingang D36 der Steuerschaltung 7 bzw. 36. Dadurch werden die durch Leistungstransistoren gebildeten Feldeffekttransistoren 8 und 37 gesperrt und der Energiefluß über die Transformatoren 9 und 38 in die Ausgangskreise unterbrochen. Sofern in der Stromversorgung keine dauerhafte Fehlfunktion vorliegt, sinken die Ausgangsspannungen ab und die Steuerschaltungen 7 und 36 werden wieder aktiv. Dieser Vorgang wiederholt sich gegebenenfalls periodisch.

Bei einer andauernden Störung in der Stromversorgung bleibt der Ausgangstransistor des Optokopplers 32 weiterhin leitend. Das hat zur Folge, daß der über den Widerstand 17 und unter Mitwirkung des Widerstandes 18 auf eine definierte Spannung aufgeladene Kondensator 20 in einer über den Widerstand 21 einstellbaren Zeit entladen wird. Sobald am Kondensator 20 keine Spannung mehr ist, schaltet der Open-Kollektor-Ausgang des Speicherkomparators 22 den Widerstand 23 an den Minuspol der Eingangsspannungsquelle 1. Dadurch hält sich der Speicherkomparator 22 im Fehlerzustand und die Disable-Eingänge D7 und D36 der Steuerschaltungen 7 und 36 liegen ständig am Minuspol der Eingangsspannungsquelle 1 an. Dieser Sperrzustand kann nur beseitigt werden, indem die Stromversorgung durch Unterbrechen des Stromes im Eingangskreis, insbesondere mit Hilfe des Schalters 3 ganz ausgeschaltet wird.

Wird als Ansteuerschaltung 7 bzw. 36 ein integrierter Schaltkreis eingesetzt, so läßt sich der üblicherweise vorhandene Disable-Eingang sowie die im Schaltkreis erzeugte Referenzspannung verwenden.

Ohne besondere Maßnahmen könnte, insbesondere beim Einschalten, bei Lastsprüngen oder bei nicht betriebsmäßiger, unsymmetrischer Last beim Testen der Schaltungsanordnung zur Stromversorgung mindestens eine der gemeinsam geregelten Ausgangsspannungen Uₐ und U_{b} einen vorgegebenen zulässigen Grenzwert überschreiten. Dies wird dadurch verhindert, daß bei Ansprechen wenigstens eines der Komparatoren 26, 29 und 49 die Steuerschaltungen 7 und 36 für die Abgabe von Einschaltimpulsen an die Feldeffekttransistoren 8 und 37 gesperrt werden. In diesen Fällen wird ein endgültiges Abschalten der Stromversorgung wirksam unterdrückt, da sich der Schwellwertschalter 51 zunächst noch nicht selbst hält.

In vorteilhafter Weise erübrigt es sich daher, zum kurzen Testen der Stromversorgung die Belastung der Ausgangskreise gleichmäßig einzustellen und/oder nach dem unerwünschten Ansprechen des Überspannungsschutzes die Stromversorgung immer wieder ein- und auszuschalten.

## Patentansprüche

1. Schaltungsanordnung zur Stromversorgung, die an eine Eingangsspannungsquelle (1) anschließbar ist und wenigstens zwei Ausgänge (a1, a2; b1, b2; c1, c2) aufweist, die jeweils eine durch eine Gleichspannung gebildete Ausgangsspannung (Uₐ, U_{b}, U_{c}) zur Speisung eines elektrischen Verbrauchers (31, 49, 50) abgeben und zur Überwachung der Ausgangsspannung (Uₐ, U_{b}, U_{c}) jeweils mit einem auf Überspannungen ansprechenden Spannungsvergleicher (26, 29, 49) versehen sind, mit einer Potentialtrennvorrichtung (32), deren Eingang an die Spannungsvergleicher angeschlossen ist, mit wenigstens einem in Serie zur Eingangsspannungsquelle (1) liegenden Schalter (8, 37), der über die Potentialtrennvorrichtung (32) durch die Spannungsvergleicher derart steuerbar ist, daß er bei wenigstens einem angesprochenen Spannungsvergleicher gesperrt ist und mit einem an den Ausgang der Potentialtrennvorrichtung angeschlossenen Schwellwertschalter (51), der ein RC-Glied zur Feststellung eines Dauerfehlers enthält, im Falle eines Dauerfehlers anspricht und sich im Falle eines Ansprechens über einen Mitkopplungskreis selbst hält,
**dadurch gekennzeichnet,** daß der Schwellwertschalter (51) einen Komparator (22) mit offenem Kollektorausgang enthält, dessen Ausgang über einen Widerstand (23) mit dem Ausgang (e) der Potentialtrennvorrichtung (32) verbunden ist und daß der Ausgang der Potentialtrennvorrichtung (32) über einen weiteren Widerstand (21) an den nicht invertierenden Eingang des Komparators (22) geführt ist und daß zwischen den beiden Eingängen des Komparators ein Kondensator (20) liegt, der mittels einer Ladeanordnung (17, 18, 19) auf eine vorgegebene Spannung aufladbar ist.

2. Schaltungsanordnung nach Anspruch 1,
**dadurch gekennzeichnet**, daß die Ladeanordnung einen zwischen den Eingängen des im Schwellwertschalter (51) enthaltenen Komparators (22) liegenden Widerstand (18) enthält, der auf der Seite des invertierenden Einganges über eine Z-Diode (19) und auf der Seite des nicht invertierenden Einganges über einen weiteren Widerstand (17) an eine Gleichspannungsquelle (2) angeschlossen ist.

3. Schaltungsanordnung nach Anspruch 1 oder 2,
**dadurch gekennzeichnet**, daß die Spannungsvergleicher jeweils als Komparator (26, 29, 49) mit offenem Kollektorausgang ausgebildet sind, der bei Überschreiten eines vorgegebenen Grenzwertes durch die von ihm überwachte Ausgangsspannung (Uₐ, U_{b}, U_{c}) ein vorgegebenes Potential annimmt, die Ausgänge der die Spannungsvergleicher bildenden Komparatoren (26, 29, 49) miteinander verbunden sind und daß die Verbindung der Komparatorausgänge über die Fotodiode eines die Potentialtrennvorrichtung bildenden Optokopplers (32) an einen mit einer Versorgungsspannung (U_{V}) gespeisten Versorgungsspannungsanschluß (d) geführt ist und daß der Fototransistor des Optokopplers (32) zwischen einem Steuerpotentialanschluß e und dem Sperreingang (D7, D36) der Steuerschaltung (7, 36) angeordnet ist.

4. Schaltungsanordnung nach Anspruch 3,
**dadurch gekennzeichnet,** daß der Versorgungsspannungsanschluß (d) über je eine Diode (30, 45) an wenigstens zwei der Ausgänge (a1, a2; c1, c2) der Vorrichtung zur Stromversorgung angeschlossen ist.

5. Schaltungsanordnung nach Anspruch 4,
**dadurch gekennzeichnet,** daß in Serie zu wenigstens einer der Dioden (45) ein Widerstand (46) angeordnet ist.

6. Schaltungsanordnung nach einem der Ansprüche 1 bis 5,
**dadurch gekennzeichnet,** daß der Eingang der Potentialtrennvorrichtung (32) an Spannungsvergleicher von wenigstens zwei in der Vorrichtung zur Stromversorgung enthaltenen Umrichtern (52, 53) angeschlossen ist.

7. Schaltungsanordnung nach einem der Ansprüche 1 bis 6,
**dadurch gekennzeichnet,** daß an den Ausgang des Schwellwertschalters (51) wenigstens ein Sperreingang einer Steuerschaltung (7, 36) eines in der Vorrichtung zur Stromversorgung enthaltenen Umrichters (52, 53) angeschlossen ist, der im primärseitigen Hauptstromkreis einen durch die Steuerschaltung steuerbaren Leistungsschalter enthält.

8. Schaltungsanordnung nach Anspruch 7,
**dadurch gekennzeichnet,** daß einem Istwerteingang der Steuerschaltung (7) jeweils ein Istwertgeber zum gemeinsamen Regeln mehrerer vom zugeordneten Umnrichter erzeugten Ausgangsspannungen (Uₐ, U_{b}) enthält.

## Claims

1. Power-supply circuit arrangement which can be connected to an input voltage source (1) and has at least two outputs (a1, a2; b1, b2; c1, c2), which in each case emit an output voltage (Uₐ, U_{b}, U_{c}) formed by a DC voltage for feeding an electrical load (31, 49, 50) and are in each case provided with a voltage comparator (26, 29, 49) responding to overvoltages, for monitoring the output voltage (Uₐ, U_{b}, U_{c}), having a potential isolating device (32) whose input is connected to the voltage comparators, having at least one switch (8, 37) in series with the input voltage source (1), the said switch(es) being able to be controlled by the voltage comparators, via the potential isolating device (32), in such a way that the switch is switched off in the event of at least one voltage comparator responding, and having a threshold value switch (51), which is connected to the output of the potential isolating device, contains an RC element for determining a permanent fault, responds in the event of a permanent fault and maintains its state via a positive feedback loop in the event of responding, characterized in that the threshold value switch (51) contains a comparator (22) with an open collector output, whose output is connected via a resistor (23) to the output (e) of the potential isolating device (32) and in that the output of the potential isolating device (32) is led via a further resistor (21) to the non-inverting input of the comparator (22) and in that, between the two inputs of the comparator, there is a capacitor (20) which can be charged by means of a charging arrangement (17, 18, 19) to a prescribed voltage.

2. Circuit arrangement according to Claim 1, characterized in that the charging arrangement contains a resistor (18), which is located between the inputs of the comparator (22) contained in the threshold value switch (51) and is connected on the side of the inverting input via a Z-diode (19) to a DC voltage source (2) and, on the side of the non-inverting input, via a further resistor (17) to the said DC voltage source.

3. Circuit arrangement according to Claim 1 or 2, characterized in that the voltage comparators are in each case constructed as a comparator (26, 29, 49) having an open collector output, which assumes a prescribed potential in the event of the output voltage (Uₐ, U_{b}, U_{c}) monitored by it exceeding a prescribed limit value, the outputs of the comparators (26, 29, 49) forming the voltage comparators are connected to one another, and in that the junction of the comparator outputs is led to a supply voltage connection (d), fed with a supply voltage (Uᵥ), via the photodiode of an optocoupler (32) forming the potential isolating device, and in that the phototransistor of the optocoupler (32) is arranged between a control potential connection e and the inhibit input (D7, D36) of the control circuit (7, 36).

4. Circuit arrangement according to Claim 3, characterized in that the supply voltage connection (d) is connected to at least two of the outputs (a1, a2; c1, c2) of the power-supply device via a diode (30, 45) in each case.

5. Circuit arrangement according to Claim 4, characterized in that a resistor (46) is arranged in series with at least one of the diodes (45).

6. Circuit arrangement according to one of Claims 1 to 5, characterized in that the input of the potential isolating device (32) is connected to voltage comparators of at least two converters (52, 53) contained in the power-supply device.

7. Circuit arrangement according to one of Claims 1 to 6, characterized in that at least one inhibit input of a control circuit (7, 36) of a converter (52, 53) contained in the power-supply device is connected to the output of the threshold value switch (51), the said converter containing a power switch, which can be controlled by the control circuit, in the primary-side main circuit.

8. Circuit arrangement according to Claim 7, characterized in that an actual value input of the control circuit (7) contains, in each case, an actual value transmitter for the joint control of a plurality of output voltages (Uₐ, U_{b}) generated by the associated converter.

## Revendications

1. Montage pour l'alimentation en courant, qui peut être raccordé à une source de tension d'entrée (1) et possède au moins deux sorties (a1,a2; b1,b2; c1,c2), qui délivrent chacune une tension de sortie (Uₐ,U_{b},U_{c}) formée par une tension continue et servant à alimenter un appareil d'utilisation électrique (31,49,50) et comportent, pour le contrôle de la tension de sortie (Uₐ,U_{b},U_{c}), respectivement un comparateur de tension (26,29,49) qui répond à des surtensions, et comportant un dispositif de séparation de potentiel (32), dont l'entrée est raccordée au comparateur de tension, au moins un interrupteur (8,37) branché en série avec la source de tension d'entrée (1) et qui peut être commandé par l'intermédiaire du dispositif de séparation de potentiel (32) par le comparateur de tension de telle sorte qu'il est bloqué dans le cas d'au moins un comparateur de tension qui a répondu, et comportant un commutateur à valeur de seuil (51), qui est raccordé à la sortie du dispositif de séparation de potentiel et comporte un circuit RC servant à déterminer un défaut permanent, répond dans le cas d'un défaut permanent et s'arrête automatiquement dans le cas d'une réponse, par l'intermédiaire d'un circuit de rétroaction,
caractérisé par le fait que le commutateur à valeur de seuil (51) comporte un comparateur (25) possédant une sortie à collecteur ouvert et dont la sortie est reliée par l'intermédiaire d'une résistance (23) à la sortie (e) du dispositif de séparation de potentiel (32) et que la sortie du dispositif de séparation de potentiel (32) est reliée, par l'intermédiaire d'une autre résistance (21), à l'entrée non inverseuse du comparateur (22), et qu'entre les deux entrées du comparateur est disposé un condensateur (20), qui peut être chargé à une tension prédéterminée par l'intermédiaire d'un dispositif de charge (17,18,19).

2. Montage suivant la revendication 1, caractérisé par le fait que le dispositif de charge contient une résistance (18) située entre les entrées des comparateurs (22) contenus dans le commutateur à valeur de seuil (52) et qui est raccordée, du côté de l'entrée inverseuse, par l'intermédiaire d'une diode Zener (19) et du côté de l'entrée non inverseuse, par l'intermédiaire d'une autre résistance (17) à une source de tension continue (2).

3. Montage suivant la revendication 1 ou 2, caractérisé par le fait que les comparateurs de tension sont constitués respectivement sous la forme d'un comparateur (26,29,49) comportant une sortie à collecteur ouvert et qui, lors du dépassement d'une valeur limite prédéterminée par la tension de sortie (Uₐ,U_{b},U_{c}), qui est contrôlée par ce comparateur, prend un potentiel prédéterminé, les sorties des comparateurs (26,29,49), qui constituent le comparateur de tension, sont reliées entre elles et que le point de jonction des sorties des comparateurs est relié, par l'intermédiaire de la photodiode d'un optocoupleur (32) constituant le dispositif de séparation de potentiel, à une borne de tension d'alimentation (d) alimentée par une tension d'alimentation (U_{V}), et que le phototransistor de l'optocoupleur (32) est disposé entre une borne (e) du potentiel de commande et l'entrée de blocage (D7,D36) du circuit de commande (7,36).

4. Montage suivant la revendication 3, caractérisé par le fait que la borne (d) de tension d'alimentation est reliée, par l'intermédiaire d'une diode respective (30,45), à au moins deux des sorties (a1,a2; c1,c2) du dispositif d'alimentation en courant.

5. Montage suivant la revendication 4, caractérisé par le fait qu'une résistance (46) est disposée en série avec au moins l'une des diodes (45).

6. Montage suivant l'une des revendications 1 à 5, caractérisé par le fait que l'entrée du dispositif de séparation de potentiel (32) est raccordée à des comparateurs de tension d'au moins deux convertisseurs (52,53) contenus dans le dispositif d'alimentation en courant.

7. Montage suivant l'une des revendications 1 à 6, caractérisé par le fait qu'à la sortie du commutateur à valeur de seuil (51) est raccordée au moins une entrée de blocage d'un circuit de commande (7,36) d'un convertisseur (52,53) qui est contenu dans le dispositif d'alimentation en courant et contient, dans le circuit principal situé côté primaire, un disjoncteur commandable par le circuit de commande.

8. Montage suivant la revendication 7, caractérisé par le fait qu'une entrée de la valeur réelle du circuit de commande (7) comporte, respectivement, un générateur de valeurs réelles servant à régler en commun plusieurs tensions de sortie (Uₐ,U_{b}) produites par le convertisseur associé.
